Europäisches Patentamt

European Patent Office

Office européen des brevets

(19)

(11) Publication number: **0 140 682**
**A1**

(12)                    **EUROPEAN PATENT APPLICATION**

(21) Application number: 84307379.2

(51) Int. Cl.⁴: **B 28 B 1/26**

(22) Date of filing: 26.10.84

(30) Priority: 28.10.83 JP 200879/83

(43) Date of publication of application: 08.05.85
Bulletin 85/19

(84) Designated Contracting States: **CH DE FR GB IT LI NL SE**

(71) Applicant: **HITACHI, LTD., 6, Kanda Surugadai 4-chome Chiyoda-ku, Tokyo 100 (JP)**

(72) Inventor: **Sakai, Junji, 213-63, Hakari Minorimachi, Higashiibaraki-gun Ibaraki-ken (JP)**
Inventor: **Kuniya, Keiichi, 24-10 Nishinarusawacho-1-chome, Hitachi-shi (JP)**
Inventor: **Sobue, Masahisa, 433-75 Yonezawacho, Mito-shi (JP)**
Inventor: **Nakazawa, Tetsuo, 4-6-18 Higashidaira Tomobemachi, Nishiibaraki-gun Ibaraki-ken (JP)**
Inventor: **Sasaki, Toshimi, 2263-26, Horimachi, Mito-shi (JP)**

(74) Representative: **Harrison, David Christopher et al, MEWBURN ELLIS & CO 2/3 Cursitor Street, London EC4A 1BQ (GB)**

(54) **A method for producing a ceramic article.**

(57)   A ceramic article having a complicated configuration and non-uniform in wall thickness such as a turbocharger rotor for automobiles, a rotor for gas turbine engines and the like is produced by casting a ceramic-containing slurry 1 into a mold 2, 3. Problems caused by non-uniform absorption of the liquid in the slurry are avoided by effecting orientated solidification of the slurry in the mold. Part 2 of the mold is absorptive, while part 3 is non-absorptive.

EP 0 140 682 A1

0140682

# A METHOD FOR PRODUCING A CERAMIC ARTICLE

## BACKGROUND OF THE INVENTION

### Field of the Invention

This invention relates to a method for producing a ceramic article by casting a ceramic-containing slurry into a mold. More particularly, the invention relates to a method for producing a ceramic article, which method is especially suited for the production of the articles which are complicated in configuration and not uniform in wall thickness such as turbocharger rotors for automobiles, rotors for gas turbine engines and the like.

### Description of the Prior Art

A typical method for producing a ceramic article is to cast a ceramic-containing slurry into a mold and solidify it.

A mold used in this known type of method is entirely composed of a water-absorptive material, so that water in the slurry is absorbed up by the mold from its whole inner surface.

This method can hardly be applied to the production of an article having a complicated configuration and non-uniformity in wall thickness, such as a turbocharger rotor for automobiles or a rotor for gas turbine engines. If this method is applied to the production of such article, there takes place non-uniform absorption of water in the slurry into the mold, that is, water in the slurry is absorbed rapidly in some area of the mold while water absorption is slow in other areas of the mold. Consequently, the rate of solidification of the slurry varies depending upon parts of the mold, resulting in a wide scatter of density in the solidified ceramic product. If, for instance, a ceramic turbocharger rotor is produced by this method, the vane of the rotor is very high in density near its surface while it is extremely low underneath.

When the solidified ceramic product with such wide variation of density is taken out of the mold, the surface of the product may be damaged or cracked during release from the mold. Further, when the released ceramic product is dried and sintered, a great dimensional variation tends to arise due to shrinkage of the product, causing a deformation or cracking of the solidified product.

Japanese Patent Publication No. 28687/81 discloses a method in which a solidified ceramic product is formed in a mold and then the mold is removed without causing any damage to the solidified product. According to this method, a ceramic-containing slurry is centrifuged by a water-absorptive mold placed on a rotary table. It is stated in this patent that the casting operation should be completed before the water-absorptive mold begins to absorb water contained in micropores of the casting, that if the casting operation is carried out during the stage where the mold is absorbing water contained in the micropores of the solidified casting, the casting begins to shrink in the mold and is cracked. In such a method, the casting separated from the mold and still heavy with moisture must be immersed in a liquid-absorptive porous medium while kept placed in the mold made of a fusible organic material, and then the mold must be fused away. Thus, in such a method, one of the mold constituents is obviously consumables.

## SUMMARY OF THE INVENTION

The object of this invention is to provide a method for producing a ceramic article which has little fear of incurring cracking and deformation when the solidified product of a ceramic material is released from a mold or sintered thereafter.

According to this invention, said ceramic article is obtained by casting a ceramic-containing slurry into a mold and solidifying it with an orientation.

## BRIEF DESCRIPTION OF THE DRAWINGS

Fig. 1 is a sectional view showing the construction of the mold in an embodiment of this invention.

Fig. 2 is a sectional view of a mold and a green body according to the prior art.

Fig. 3 is a sectional view of a mold and a green body according to another embodiment of this invention.

Fig. 4 is an electron microscope photograph showing a section of the sintered product of the green body shown in Fig. 2.

Fig. 5 is an electron microscope photograph showing a section of the sintered product of the green body shown in Fig. 3.

DETAILED DESCRIPTION OF PREFERRED EMBODIMENTS

The present invention is based on the finding of the fact that the ceramic solidified product obtained by solidifying a ceramic-containing slurry with an orientation is extremely fine in texture and minimized in scatter of density so that such solidified product is not cracked when released from the mold and also proves highly resistant to deformation and cracking when sintered.

When the term "ceramic article" is used in this invention, it refers to any solidified matter obtained by casting a ceramic-containing slurry into a mold and solidifying such slurry with an orientation as well as the sintered product of such solidified matter. The ceramic solidified matter before sintering may be generally called green body.

The ceramic-containing slurry used in this invention can be prepared by suspending a ceramic material in a proper liquid medium. Any known type of a ceramic material such as silicon carbide, alumina, zirconia, silicon nitride, sialon, etc., can be used, but the ceramic material most suitable for use in the method of this invention is silicon carbide.

The ceramic particles in the ceramic-containing slurry may be of any size, but it is usually desirable that the size of said ceramic particles is of the order of several micrometers, more specifically not greater than 5 μm. In case of using silicon carbide, it is especially desirable that the particle size thereof is not greater than 1 μm. By suspending such fine ceramic particles in a slurry, it becomes possible to realize substantial prevention of cracking of the solidified matter when released from the mold. It is also made possible to minimize deformation of the ceramic article after sintering and to substantially unnecessitate any working for correction of shape.

The liquid medium used for suspending the ceramic particles can be of any type provided that it is capable of uniformly dispersing the ceramic particles. The most preferred liquid medium for use in this invention is water.

The ceramic-containing slurry can be prepared from the ceramic particles and a liquid medium such as water. For the practical purpose, however, it is desirable to contain a sintering aid and a deflocculant.

In case of a silicon carbide-containing slurry, it is preferred to use boron carbide and graphite powder as sintering aid and triethanolamine as a defluc- culant.

When forming a slurry by suspending ceramic particles in water, the amount of water used is preferably 12 to 25 parts by weight to 100 parts by weight of ceramic. If the amount of water is less than 12 parts by weight, the resulting slurry will have too high viscosity to effect smooth gravitational casting into the mold. Increase of the amount of water necessitates a longer time for the casting operation, and when the water amount exceeds 50 parts by weight, it may become necessary to make extra supply of slurry when solidifying the slurry.

Orientated solidification of the ceramic-containing slurry in the mold can be accomplished by removing water in said slurry from a part of the mold.

It is most desirable in achieving such orientated solidification to remove water in the slurry from the bottom of the mold. This makes it possible to produce a ceramic article having a high denseness and a minimized scatter of density in the whole structure of the article.

As a means for effecting said orientated solidification, it is most convenient and also effective to form a part of the mold from a water-absorptive material. Water in the slurry is absorbed and removed by the water-absorptive mold.

In case of forming a part of the mold from a water-absorptive material to effect the orientated solidification of a ceramic-containing slurry, the slurry is solidified successively from its portion contacting the section of the water-absorptive mold. Water is absorbed through the fine voids between the solidified ceramic particles, allowing steady progress of the solidification.

In the ceramic-containing slurry, ceramic is not dissolved in the liquid medium; the fine ceramic particles are merely suspended in the medium. Therefore, in this invention, by "the ceramic-containing slurry is solidified or set", is meant that the ceramic particles suspended in the liquid medium are agglomerated to form a solid mass with final disappearance of the liquid medium. The thus obtained solidified product will not be cracked or broken when taken out of the mold.

A gypsum mold, synthetic resin-made mold or unglazed mold or a suitable combination thereof can be used as the water-absorptive mold.

A gypsum mold can be best used as the water-absorptive mold in this invention. The ceramic article produced by using such gypsum mold has an extremely smooth and flat surface at its portion contacted with the gypsum mold.

For carrying out the method of this invention, the mold is constituted by a combination of a water-absorptive mold and a non-water-absorptive mold, the latter type mold being used at the portion where the orientated solidification is not to be effected.

As the non-water-absorptive mold, there can be used a rubber mold, metal mold or a synthetic resin-made mold or a suitable combination thereof. A rubber mold is most preferred. In an embodiment of this invention where a rubber mold was used as the non-water-absorptive mold, no break and crack occurred in the ceramic article when released from the mold, and also a dense and smooth surface was obtained.

It is desirable to give vibration to the slurry in the mold. Such vibration helps to increase the ceramic packing rate to enhance the dimensional accuracy of the produced ceramic article. A vibrator may be used as a means for giving such vibration. The direction of vibration may be either vertical or horizontal.

The prepared ceramic-containing slurry is preferably subjected to a degassing treatment under reduced pressure before cast into the mold. The air bubbles and gas contained in the slurry can be removed by such degassing treatment in a reduced pressure atmosphere to upgrade the quality of the produced ceramic article.

Gas trapped in the solidified product becomes a cause of cracking of the product when it is sintered. The degassing treatment of the slurry under reduced pressure can substantially prevent the cracking of ceramic article due to the presence of gas. The reduced pressure is preferably in the range of 70 to 80 cmHg, most preferably in the range of 73 to 76 cmHg.

The slurry which has undergone said degassing treatment may be either immediately cast into the mold while placed under reduced pressure, or it may be returned into the atmospheric air and then cast into the mold.

- 9 -                    0140682

In the former case, it is a recommendable method to place the slurry and the mold in a vessel provided with a pressure reducing means and carry out a series of operations in such vessel.

It is also a desirable method to cast the ceramic-containing slurry into the mold under pressure. This method can be applied to the slurry which has undergone the degassing treatment under reduced pressure. In this case, application of a pressure of the order of 0.1 to 2 $kg/cm^2$ can well serve for the purpose. In the method using a rubber mold as the non-water-absorptive mold, use of a large pressure may rather cause a degradation of dimensional precision, and in view of this, the pressure applied in this method is recommended to be within said range.

By casting the ceramic-containing slurry under pressure, it is possible to markedly increase a ceramic packing rate as in case of giving vibration.

The slurry may be placed under pressure after having been cast into the mold. This method is effective in case the slurry has been cast without pressure, that is, in case the slurry has been cast under reduced pressure or in the atmospheric air. Of course, it can as well be applied in case the slurry has been cast under pressure.

It is also effective to rapidly remove water in the slurry by heating it after the slurry has been cast into the mold. In this case, slurry heating may be effected by heating the whole mold, but it is better to heat the water absorptive mold alone so as to effectuate orientated solidification more eminently. This produces a greater effect for increasing the ceramic packing rate. In case of using gypsum for the water-absorptive mold, heating thereof should be conducted at a temperature below 70°C. In case such mold is heated to a temperature above 70°C, it might be cracked. An effect to expedide orientated solidification of the slurry is sufficiently attained by heating at a temperature below 70°C.

The interior of the mold may be temporarily placed in a reduced pressure condition after the slurry has been cast into the mold. This is another effective means for removing gas in the slurry. In this case, the interior of the mold is preferably retained under reduced pressure within the range of 10 to 30 cmHg.

Incorporation of said step of placing the mold interior under reduced pressure condition after casting of the slurry is very effective in case no degassing treatment under reduced pressure is conducted during preparation or casting of the slurry. Of course, this step may be incorporated in the case wherein the treatment under reduced pressure is conducted, with a view to further heightening the degassing effect.

In order to provide a desired property to the solidified product obtained by casting the ceramic-containing slurry into the mold and then solidifying said slurry with an orientation, such solidified product may be further dried and sintered in the usual way.

In a preferred embodiment of the method according to this invention, a slurry containing water in an amount of 35 to 45 parts by weight to 100 parts by weight of silicon carbide with an average particle size of 1 μm or less and also containing a sintering aid and a deflocculant is subjected to a degassing treatment under reduced pressure, then returned into the atmospheric air and cast into a mold consisting of a water-absorptive mold and a non-water-absorptive mold for effecting orientated solidification and the solidified product is taken out of the mold, dried and sintered in the usual way.

In the method of this invention, the mold need not be turned or moved but can be kept stationary.

The present invention will be explained with reference to some examples below.

EXAMPLE 1

In this embodiment, the production of a stepped shaft was made.

The shaft produced was 20 mm in diameter at the thickest part thereof and dwindled down gradually. The shaft length was 200 mm.

The mold was manufactured in the following way. A water-absorptive mold made of gypsum was used to constitute the end face of the 20 mm-diameter portion. The gypsum used was commercially available calcined gypsum.

Gypsum was put into water at a rate of 100 parts by weight of gypsum to 70 parts by weight of water and mixed by a stirring mixer (speed: 300 r.p.m.) for 2 minutes to prepare a slip. This slip was cast into a wooden model. When gypsum has set, the model was removed and the molding was kept in a dryer at 50°C for 10 hours to let out water. A half-split rubber mold was employed for constituting the other part of the mold. Said gypsum mold and rubber mold were combined together to form an integral female mold.

The ceramic-containing slurry was prepared from the following composition:

| | | |
|---|---|---|
| Refractory particles of silicon carbide | | 100 parts by weight |
| Sintering aid: $B_4C$ | | 1.0 " |
| | C (graphite powder) | 4.0 " |
| Deflocculant: | triethanolamine | 1.0 " |
| Water | | 40.0 " |

The above materials, 200 grams in all, were mixed by a mixing mill for 24 hours to obtain a slurry. This slurry was subjected to a reduced pressure treatment by leaving the slurry in a vacuum atmosphere of 73.5 cmHg for 5 minutes to eliminate air in the slurry. The thus prepared slurry was cast into said female mold from its top opening to fill the mold. The slurry was solidified progressively from its portion placed near the gypsum mold as water in the slurry was absorbed by said gypsum mold. After the slurry has been solidified completely, the molding was released from the female mold to obtain a green body.

For removing water in the green body, it was left in a dryer of 60 ± 2°C for 24 hours and then the temperature of the dryer was raised to 105°C to heat the green body at this temperature for 2 hours. The resulting product was then sintered by the following treatment.

The molding was put into a graphite-made vessel and this graphite vessel was placed in a sintering furnace. After the inside of the furnace was evacuated to a pressure of $3 \times 10^{-4}$ Torr, argon gas was introduced into the furnace, which was heated while maintaining the pressure inside the furnace at 100 Torr with the argon gas. The heating was carried out at a heating rate of 8.3°C/min. till reaching the maximum temperature of 2,200°C at which the furnace was retained for one hour and then cooled. As a result, the sintered body suffered no deformation and a shaft with high superficial and dimensional accuracy was obtained. The relative density of the shaft was 86.0%.

EXAMPLE 2

Production of a turbocharger rotor for automobiles according to the method of this invention was made.

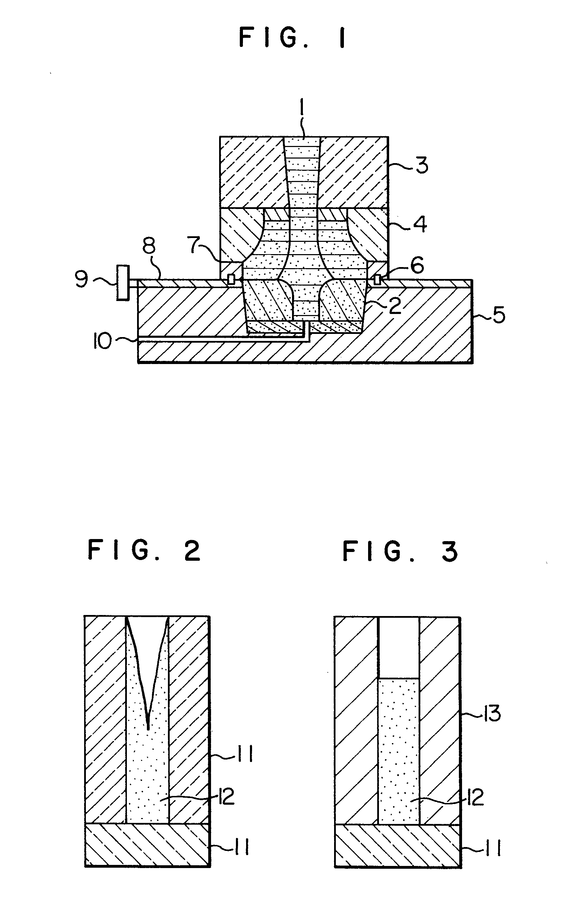

Fig. 1 is a diagrammatic sectional view showing the construction of the mold.

The same blend and preparation of a slurry as in Example 1 were used.

The slurry was cast into a mold from its gate 1. The gypsum-made water-absorptive mold 2 absorbs water in the slurry to effect its orientated solidification. When the slurry was solidified at the gate, a rubber-made non-water-absorptive mold 3 and ring die 4 were removed. Then a vane die 7 secured to a fixed die 5 by pins 6 was moved in the circumferential direction by operating a handle 9 joined to a movable bar 8 to release the vane portion. Then compressed air was introduced from an air inlet 10 to release the water-absorptive mold. Thereby a green body of the desired rotor was obtained.

For removing water in the green body, it was subjected to heat drying at 50°C for 24 hours and then at 110°C for 5 hours, followed by the same sintering treatment as conducted in Example 1. As a result, there was obtained a sintered body of rotor with stabilized superficial and dimensional accuracy. The relative density of the sintered body was 86.4%.

EXAMPLE 3

Ceramic articles were produced according to the conventional omnidirectional solidification method and according to the orientated solidification method of this invention, and the properties of these ceramic articles were compared by using the bar-shaped specimens (5 x 20 x 50 mm).

- 15 -

0140682

In the method of this invention, the bottom portion of the mold was constituted with a gypsum mold and the other portion was constituted with a rubber mold. In the conventional method, the whole mold was composed of gypsum.

The slurry blend, mixing, drying and sintering were the same as in Example 1.

The properties of the produced green bodies and sintered bodies are shown in Table 1.

Table 1

| | | Prior art | This invention |
|---|---|---|---|
| Green body | Density $(g/cm^3)$ | 1.27 | 1.54 |
| Sintered body | Density $(g/cm^3)$ | 2.69 | 2.85 |
| | Shrinkage (%) | 20.0 | 14.7 |
| | Weight loss (%) | 8.0 | 4.2 |

The above results show that according to the method of this invention, the properties of both the green body and sintered body are markedly improved over the products according to the conventional method.

Sectional views of the green bodies and molds according to the conventional method and the method (in an embodiment) of this invention are shown in Fig. 2 and Fig. 3, respectively.

The green body 12 produced by using the conventional gypsum mold 11 had a large depression in the center. No such depression was formed in the green body produced by casting a ceramic-containing slurry into the mold consisting of a gypsum mold 11 and a rubber mold 13 according to this invention.

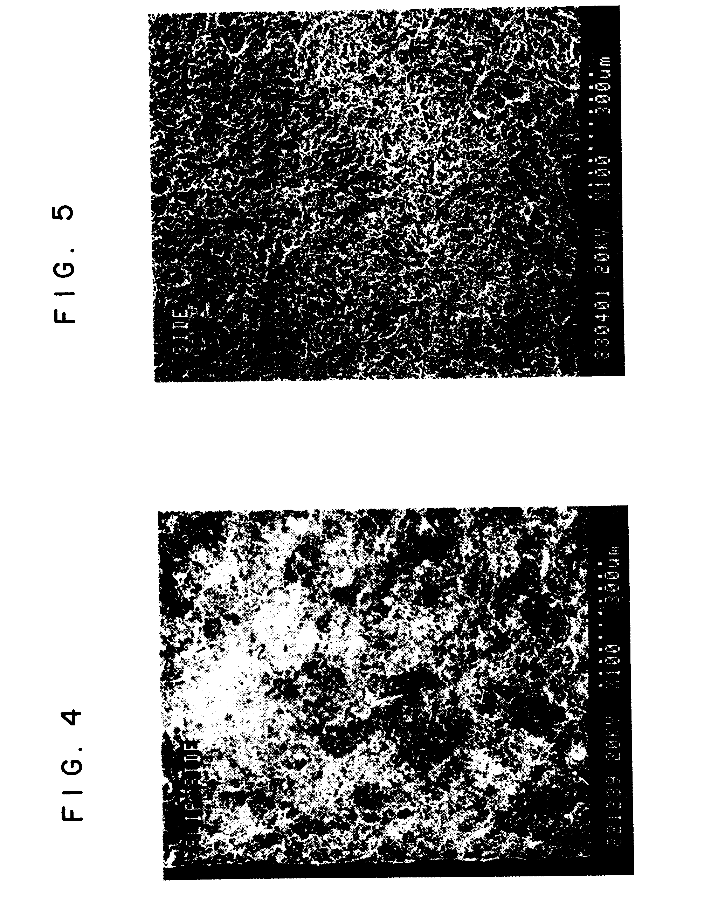

These green bodies were dried and sintered, and the obtained sintered bodies were cut at the center and the break surfaces were examined with a scanning electron microscope (SEM). Their microphotographs are shown in Figs. 4 and 5.

The sintered body produced according to the conventional method, shown in Fig. 4, has cavity in the center and is also irregular in particle arrangement. On the other hand, in the sintered body produced according to the method of this invention, shown in Fig. 5, the particles are uniformly packed and the density is also stabilized.

Thus, according to this invention, there can be obtained a ceramic article typified by uniform density of the green body, easy release from the female mold, no deformation and cracking in the course of drying and sintering, and stabilized density of the product.

COMPARATIVE EXAMPLE

A turbocharger rotor for automobiles, similar to that produced in Example 2, was made by using a mold of which the other portion than the gypsum-made water-absorptive mold 2 was composed of a wax and by turning the water-absorptive mold 2.

When the green body was released from the wax

0140682

mold, the vane portion dropped out and the wax could not be released.

As described above, according to the method of this invention, the density of the green body can be increased, the release from the mold is easy, and an article with a smooth surface can be obtained. Further, deformation of the green body in drying and sintering thereof is minimized, and it is possible to obtain an article stabilized in dimension.

CLAIMS

1. A method for producing a ceramic article, which comprises casting a ceramic-containing slurry into a mold and effecting orientated solidification of the slurry in the mold.

2. A method for producing a ceramic article according to claim 1, wherein orientated solidification is effected by removing water in the slurry from a part of said mold.

3. A method for producing a ceramic article according to claim 2, wherein water in the slurry is removed from the bottom portion of said mold.

4. A method for producing a ceramic article according to claim 2 or claim 3, wherein a part of said mold is constituted by a water-absorptive material to thereby absorb away water in the slurry.

5. A method for producing a ceramic article according to any one of claims 1 to 4, wherein said ceramic-containing slurry contains water in an amount of 20 to 50 parts by weight to 100 parts by weight of ceramic.

6. A method for producing a ceramic article according to any one of claims 1 to 5, wherein said ceramic is silicon carbide.

7.      A method for producing a ceramic article according to claim 6, wherein said silicon carbide has an average particle size of 1 µm or less.

8.      A method for producing a ceramic article according to any one of claims 1 to 7, wherein said ceramic-containing slurry contains water in an amount of 12 to 50 parts by weight to 100 parts by weight of silicon carbide, as well as a sintering aid and a deflocculant.

9.      A method for producing a ceramic article according to any one of claims 1 to 8 wherein the mold is constituted by a water-absorptive mold portion and a non-water-absorptive mold portion.

10.     A method for producing a ceramic article according to claim 9, wherein said water-absorptive mold portion is made of gypsum.

11.     A method for producing a ceramic article according to claim 9 or claim 10, wherein said non-water-absorptive mold portion is made of rubber.

12.     A method for producing a ceramic article according to any one of claims 9 to 11, wherein the lower region of said mold including its bottom portion is constituted by said water-absorptive mold portion and the other part is constituted by said non-water-absorptive mold portion so as to absorb away water in the slurry from the lower section of the mold.

13. A method for producing a ceramic article according to any one of the preceding claims, wherein the ceramic-containing slurry is subjected to a degassing treatment under reduced pressure prior to casting into the mold.

14. A method for producing a ceramic article according to claim 13, wherein said degassing treatment is conducted at a reduced pressure of 70 to 80 cmHg or below.

15. A method for producing a ceramic article according to any one of the preceding claims wherein said ceramic-containing slurry is cast into the mold under pressure.

16. A method for producing a ceramic article according to claim 15 wherein the pressure applied to the slurry is 0.1 to 1 $kg/cm^2$.

17. A method for producing a ceramic article according to any one of the preceding claims including the step of pressing the slurry in the mold.

18. A method for producing a ceramic article according to any one of the preceding claims including the step, after casting the ceramic-containing slurry into the mold, of heating the slurry.

19. A method for producing a ceramic article according to claim 18, wherein a part of said mold is constituted by a water-absorptive material and the slurry is heated by heating said water-absorptive mold part.

20. A method for producing a ceramic article according to claim 19, wherein said water-absorptive mold part is made of gypsum and this gypsum mold part is heated to a temperature below 70°C.

21. A method for a ceramic article according to any one of the preceding claims further including the step of placing the interior of the mold, into which said slurry has been cast, under reduced pressure.

22. A method for producing a ceramic article according to claim 21, wherein the interior of the mold is place under reduced pressure after the slurry in the mold has been solidified.

23. A method for producing a ceramic article according to claim 21, including the step of placing the interior of the mold under reduced pressure during the solidification of the slurry.

24. A method for producing a ceramic article according to any one of claims 1 to 20 including the step of casting the slurry under reduced pressure.

25. A method for producing a ceramic article, which comprises subjecting a slurry containing water in an amount of 35 to 45 parts by weight to 100 parts by weight of silicon carbide with an average particle size of 1 μm or less and also containing a sintering aid and a deflocculant to a degassing treatment under reduced pressure, then returning the slurry into the atmospheric air, casting said slurry into a mold constituted from a water-absorptive mold and a non-water-absorptive mold, absorbing away water in the slurry by said water-absorptive mold to effect orientated solidification of the slurry, taking out the solidified product from said mold, drying and sintering said product.

# FIG. 1

# FIG. 2

# FIG. 3

2/2          0140682

FIG. 5

FIG. 4

| | DOCUMENTS CONSIDERED TO BE RELEVANT | | EP 84307379.2 |
|---|---|---|---|
| Category | Citation of document with indication, where appropriate, of relevant passages | Relevant to claim | CLASSIFICATION OF THE APPLICATION (Int. Cl.4) |
| Y | GB - A - 1 574 510 (FORD) <br> * Page 3, lines 1-5; fig. 2,3,5 * | 1,2,3, 4,8,9, 11,12 | B 28 B 1/26 |
| A | | 15,16, 21,22, 23,24, 25 | |
| | -- | | |
| Y | DE - A - 2 315 875 (FRIEDRICHSFELD) <br> * Page 4, lines 11-24; page 5, lines 33,34; page 6, line 32 * | 1,2,3, 4,8,9, 11,12 | |
| A | | 25 | |
| | -- | | |
| A | DE - B2 - 2 420 506 (VEB SYNTHESE-WERK) <br> * Totality * | 1,2,3, 4 | |
| | ---- | | TECHNICAL FIELDS SEARCHED (Int. Cl.4) |
| | | | B 28 B <br> C 04 B 35/00 |

The present search report has been drawn up for all claims

| Place of search | Date of completion of the search | Examiner |
|---|---|---|
| VIENNA | 28-01-1985 | GLAUNACH |